# EUROPEAN PATENT APPLICATION

(11) **EP 4 501 158 A1**
(43) Date of publication of application: **05.02.2025**
(21) Application number: 23799692.1
(22) Date of filing: 03.05.2023
(51) Int. Cl.: A41H 3/00, G06T 11/20, G06T 19/00, G06F 3/0484

(54) **METHOD AND APPARATUS FOR GENERATING PATTERN BASED ON MEASUREMENT PARAMETERS**

(30) Priority: 03.05.2022 US 202263337866 P
(71) Applicant: CLO Virtual Fashion Inc., Seoul 06236 (KR)
(72) Inventor: AHN, Hong Hyun, Seoul 06236 (KR); PHOEBE, Gatta, New York, 10016 (US)
(74) Representative: V.O.
(86) International application number: PCT/KR2023/006082
(87) International publication number: WO 2023/214811

(57) **Abstract**

According to an embodiment, a method of generating a pattern includes receiving measurement parameters, determining positions of points that are references of generating a pattern based on measurement parameters, and generating a pattern by generating a straight line or a curve that connects points of which positions are determined.

## Description

### Technical Field

The following embodiments relate to a method and devices for generating a pattern based on measurement parameters.

### Background Art

To easily design new garments, many companies or individuals have a pattern block library including a plurality of pattern blocks. The pattern blocks may refer to a pattern manufactured to suit a previously manufactured clothing style. The pattern blocks may generally be used to efficiently build new garments styles while minimizing pattern modifications and the need for pattern modifications. However, generating a pattern block library including a plurality of pattern blocks may require a lot of time and resources.

To smoothly generate such a pattern block library, a designer or a technical designer may need to make a process of generating a pattern block easy.

The above description has been possessed or acquired by the inventor(s) in the course of conceiving the present disclosure and is not necessarily an art publicly known before the present application is filed.

### Disclosure of the Invention

### Technical Solutions

According to an embodiment, a method of generating a pattern based on a measurement parameter of a garment includes receiving measurement parameters including at least one of a pattern hem length, a pattern height, an across shoulder length, a shoulder slope length, a neck depth, a neck opening, an across length, an across chest length, and an armhole length, generating a first line corresponding to a pattern hem based on the pattern hem length, generating a second line perpendicular to the first line based on the pattern height, starting from an end point of the second line, generating a neckline based on at least one of the across shoulder length, the shoulder slope length, the neck depth, and the neck opening, and generating a sleeve line based on at least one of the armhole length, the across length, and the across chest length.

According to an embodiment, the pattern height may include at least one of a high point shoulder (HPS) length and a center height.

According to an embodiment, the generating of the neckline may include, when the second line is generated based on an HPS length, generating a center point of a neckline at a position moved by a first distance based on a neck opening in a first direction and moved by a second distance based on a neck depth in a second direction and generating the neckline based on the center point.

According to an embodiment, the generating of the neckline may include, when the second line is generated based on a center height, generating an end point of a neckline that is in contact with a shoulder line at a position moved by a first distance based on a neck opening in a first direction and moved by a second distance based on a neck depth in a second direction and generating the neckline based on the end point.

According to an embodiment, the across length may vary based on a distance away from an HPS.

According to an embodiment, the generating of the sleeve line may include, starting from an end point of the neckline, generating a third line corresponding to a shoulder slope line, and starting from an end point of the third line, generating a sleeve line based on at least one of the armhole length, the across length, and the across chest length.

According to an embodiment, the generating of the sleeve line may include, starting from an end point of the third line, generating an end point of the sleeve line at a distance moved by a distance determined based on the across shoulder length and the across chest length in a first direction, and then moved by a distance determined based on the across shoulder length, the across chest length, and the armhole length in a second direction and generating a sleeve line based on the end point.

According to an embodiment, the method of generating the pattern may further include, when the across chest length is received as a length of a line at a predetermined distance away from an armhole, estimating a distance from the armhole to an opposite armhole based on the received length of the line and the pattern height, verifying the estimated distance based on the armhole length, and re-estimating a distance from the armhole to the opposite armhole according to a result of the verifying or determining the estimated distance as the across chest length.

According to an embodiment, the method of generating the pattern may further include adjusting a curvature of a line of a pattern using at least one adjusting point. The line of the pattern may include at least one of the neckline and the sleeve line.

According to an embodiment, the adjusting of the curvature may include determining whether an angular constraint is satisfied using the at least one adjusting point.

According to an embodiment, the angular constraint may include a constraint such that a straight line generated by the at least one adjusting point entering one end point of the line of the pattern and an outline meeting an end point of the line of the pattern are orthogonal to each other.

According to an embodiment, the method of generating the pattern may further include adjusting a length of a line of a pattern using at least one adjusting point. The line of the pattern may include at least one of the neckline and the sleeve line.

According to an embodiment, the adjusting of the length may include determining whether a length constraint is satisfied using the at least one adjusting point.

According to an embodiment, the length constraint may include a constraint such that a length of at least a part of another pattern combined with the pattern and the length of the line of the pattern are the same.

According to an embodiment, a method of generating a pattern based on a measurement parameter of a garment includes receiving measurement parameters including at least one of a sleeve hem length, a sleeve length, a cap height, a biceps width, and a cap opening, generating a fourth line based on the sleeve hem length, generating a fifth line perpendicular to the fourth line based on the sleeve length, and starting from an end point of the fifth line, generating a cap line based on at least one of the cap height and the biceps width.

According to an embodiment, the generating of the cap line may include, starting from an end point of the fifth line, determining a position moved by a distance determined based on the biceps width in a first direction and moved by a distance determined based on the cap height in a second direction as an end point of the cap line and generating a cap line based on the end point.

According to an embodiment, the method of generating the pattern may further include determining whether a length constraint for a length of a sleeve line and a length of the cap line is satisfied.

According to another embodiment, a simulation device includes a processor. The processor is configured to receive measurement parameters including at least one of a pattern hem length, a pattern height, an across shoulder length, a shoulder slope length, a neck depth, a neck opening, an across length, an across chest length, and an armhole length, generate a first line corresponding to a pattern hem based on the pattern hem length, generate a second line perpendicular to the first line based on the pattern height, starting from an end point of the second line, generate a neckline based on at least one of the across shoulder length, the shoulder slope length, the neck depth, and the neck opening, and generate a sleeve line based on at least one of the armhole length, the across length, and the across chest length.

According to another embodiment, a simulation device includes a processor. The processor is configured to receive measurement parameters including at least one of a sleeve hem length, a sleeve length, a cap height, a biceps width, and a cap opening, generate a fourth line based on the sleeve hem length, generate a fifth line perpendicular to the fourth line based on the sleeve length, and starting from an end point of the fifth line, generate a cap line based on at least one of the cap height and the biceps width.

### Effects

According to an embodiment, due to a method of generating a pattern, users may easily and quickly generate a pattern block library including a plurality of pattern blocks.

According to an embodiment, using pattern blocks included in a pattern block library, since a pattern may be generated by inputting only some measurement parameters among numerous measurements used in designing garments, even beginners may easily use a garment simulation program and design garments.

### Brief Description of Drawings

FIG. 1 is a flowchart illustrating a method of generating a pattern based on a measurement parameter, according to an embodiment.
FIG. 2 is a flowchart illustrating a method of generating a pattern corresponding to a first pattern block, according to an embodiment.
FIG. 3 is a diagram illustrating a measurement parameter corresponding to the first pattern block according to an embodiment.
FIGS. 4A and 4B are diagrams illustrating a process of generating a neckline, according to an embodiment.
FIGS. 5A and 5B are diagrams illustrating a process of generating a sleeve line, according to an embodiment.
FIG. 6 is a diagram illustrating a method of calculating a distance between an armhole and an armhole, according to an embodiment.
FIG. 7 is a flowchart illustrating a method of generating a pattern corresponding to a second pattern block, according to an embodiment.
FIG. 8 is a diagram illustrating a measurement parameter corresponding to the second pattern block according to an embodiment.
FIG. 9 is a diagram illustrating a process of generating a cap line, according to an embodiment.
FIG. 10 is a diagram illustrating a user interface that may input a measurement parameter corresponding to the first pattern block according to an embodiment.
FIG. 11 is a block diagram illustrating a simulation device according to various embodiments.

### Best Mode for Carrying Out the Invention

The following structural or functional descriptions are exemplary to merely describe the embodiments, and the scope of the embodiments is not limited to the descriptions provided in the present specification.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more of other features, integers, steps, operations, elements, components, and/or groups thereof.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, examples will be described in detail with reference to the accompanying drawings. In the drawings, like reference numerals are used for like elements.

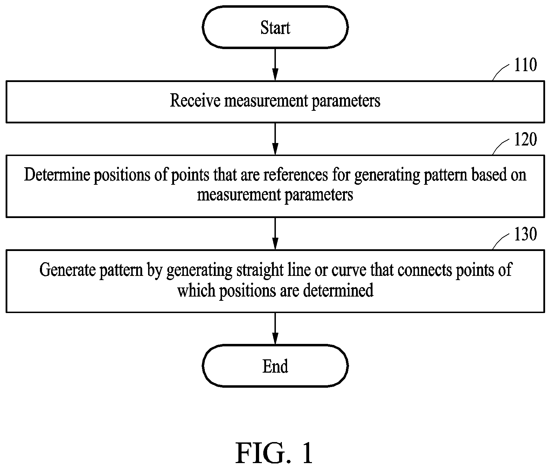

FIG. 1 is a flowchart illustrating a method of generating a pattern based on a measurement parameter, according to an embodiment.

According to an embodiment, in operation 110, a simulation device 1100 may receive measurement parameters. The measurement parameter may include a plurality of garment measurements. The measurement parameters may include details of garments. In addition, the measurement parameters may be values stated in a garment specification sheet or a measurement table.

According to an embodiment, in operation 120, the simulation device 1100 may determine positions of points that are references for generating a pattern based on measurement parameters. The measurement parameters may refer to garment measurements. Accordingly, the simulation device 1100 may generate a point at a position moved by a distance determined based on the size of a garment and may also generate a line by connecting a point to a point.

The measurement parameters may vary depending on a pattern block. For example, when the pattern block is a T-shirt torso front (or back) pattern, the measurement parameters may include at least one of a pattern hem length, a pattern height, an across shoulder length, a shoulder slope length, a neck depth, a neck opening, an across length, an across chest length (e.g., a length corresponding to half of the chest circumference), and an armhole length. The described measurement parameters are only examples, and some measurement parameters may be omitted or other measurement parameters may be added thereto. In another example, when the pattern block is a T-shirt sleeve pattern, the measurement parameters may include at least one of a sleeve hem length, a sleeve length, a cap height, a biceps width, and a cap opening. As such, the measurement parameters may vary depending on the pattern block. The pattern block may exist not only for T-shirts but also for a pattern of other garments such as pants and skirts.

According to an embodiment, the simulation device 1100, in operation 130, may generate a pattern by generating a straight line or a curve that connects points of which positions are determined. The simulation device 1100 may generate a plurality of lines based on positions of points determined based on the measurement parameters. The simulation device 1100 may generate a pattern by determining at least a part of the plurality of lines as an outline of the pattern. Here, the line may be a straight line, a curve, or a combination thereof.

The simulation device 1100 may generate a pattern through operations 110, 120, and 130, and operations 110, 120, and 130 may vary depending on a pattern block. A detailed method of generating a pattern depending on the pattern block is described in detail below with reference to the following drawings.

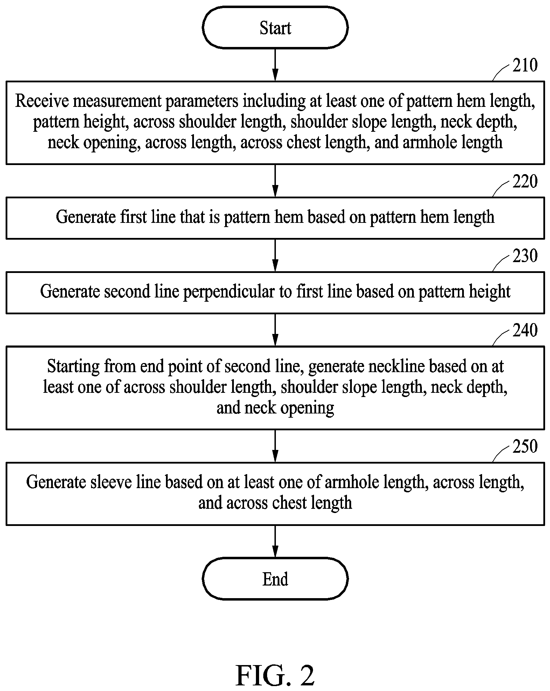

FIG. 2 is a flowchart illustrating a method of generating a pattern corresponding to a first pattern block, according to an embodiment.

The first pattern block may be a t-shirt front pattern, but an example is not limited thereto.

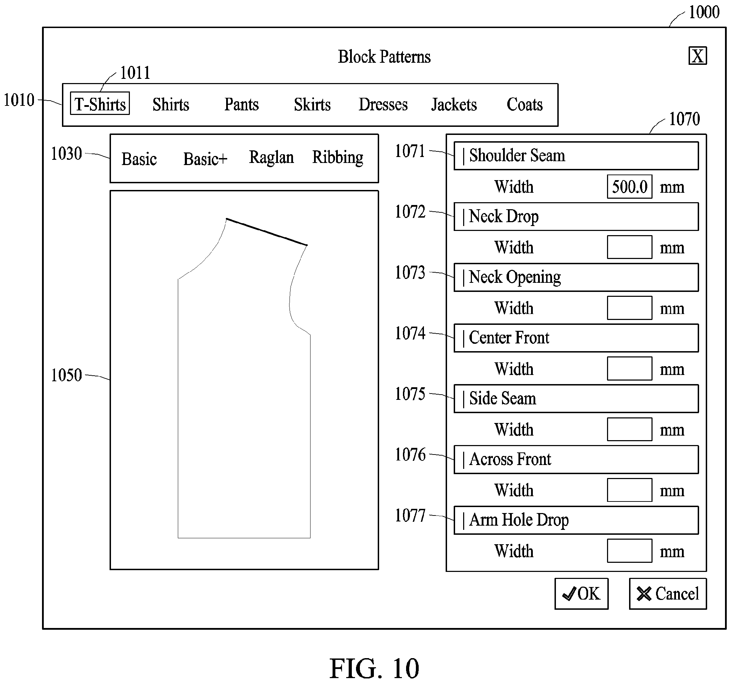

According to an embodiment, the simulation device 1100, in operation 210, may receive measurement parameters including at least one of a pattern hem length, a pattern height, an across shoulder length, a shoulder slope length, a neck depth, a neck opening, an across length, an across chest length, and an armhole length. The simulation device 1100 may receive the measurement parameters from a user through a user interface shown in FIG. 10.

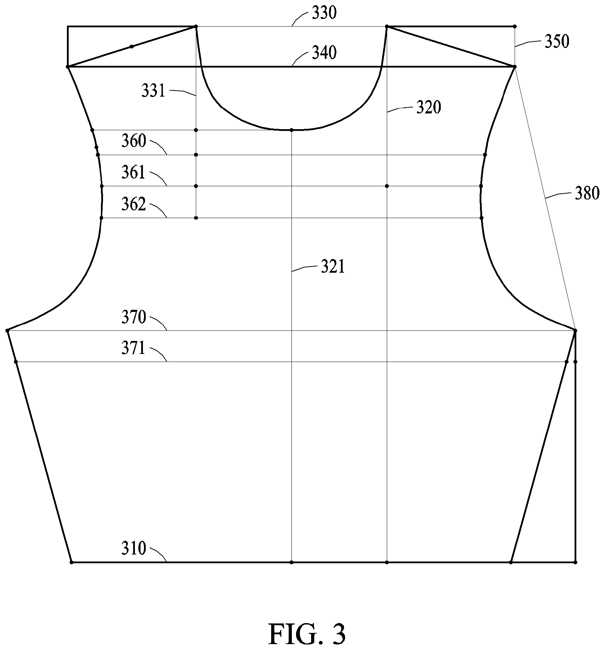

The pattern hem length may include, for example, a hem sweep. The sweep may refer to the hem circumference or the hem length of a skirt, dress, coat, or jacket. Referring to FIG. 3, the pattern hem length may correspond to a length of a line 310.

The pattern height may refer to a length starting from a pattern hem to a center of a high point shoulder (HPS) or a neckline of a pattern. Referring to FIG. 3, when a distance starting from the pattern hem to the HPS of the pattern is a pattern height, the pattern height may correspond to a length of a line 320. The HPS length may refer to a distance starting from the pattern hem to the HPS of the pattern. In another example, when a length starting from the pattern hem to the center of the neckline is a pattern height, the pattern height may correspond to a length of a line 321. The center height may refer to a length starting from the pattern hem to the center of the neckline.

The across shoulder length may refer to a horizontal length from the left shoulder to an end of the right shoulder. Referring to FIG. 3, the across shoulder length may correspond to a length of a line 340.

The shoulder slope length may be a length associated with a shoulder slope line. For example, the shoulder slope length may refer to a shoulder slope height. Referring to FIG. 3, the shoulder slope length may correspond to a length of a line 350. In this case, the shoulder slope length may be the shoulder slope height.

The neck depth may refer to a distance between the center of the neckline and a line 330 of FIG. 3. Referring to FIG. 3, the neck depth may correspond to a length of a line 331.

The neck opening may refer to a horizontal distance from an end point of the left neckline to an end point of the right neckline. Referring to FIG. 3, the neck opening may correspond to a length of the line 330.

The across length may refer to a length that connects one point on a left sleeve line and one point on a right sleeve line. For example, when a pattern block is a T-shirt front pattern, the across length may be an across front length, and when a pattern block is a T-shirt back pattern, the across length may be an across back length. Referring to FIG. 3, the across length may correspond to at least one of lengths of lines 360, 361, and 362. According to an embodiment, the simulation device 1100 may generate a pattern using at least one of the lengths of the lines 360, 361, and 362.

The across chest length may be a length determined based on a distance between a left armhole and a right armhole. Referring to FIG. 3, the across chest length may be one of lengths of lines 370 and 371. According to an embodiment, the simulation device 1100 may generate a pattern using at least one of the lengths of the lines 370 and 371. The line 371 may be a line positioned "1" inch below the armhole.

The armhole length may refer to a length obtained by connecting both end points of one sleeve line in a straight line. Referring to FIG. 3, the armhole length may correspond to a length of a line 380.

According to an embodiment, the simulation device 1100, in operation 220, may generate a first line that is a pattern hem based on the pattern hem length. Referring to FIG. 3, the first line generated by the simulation device 1100 may correspond to the line 310.

According to an embodiment, the simulation device 1100, in operation 230, may generate a second line perpendicular to the first line based on the pattern height. Referring to FIG.3, the second line may correspond to at least one of the line 320 and the line 321.

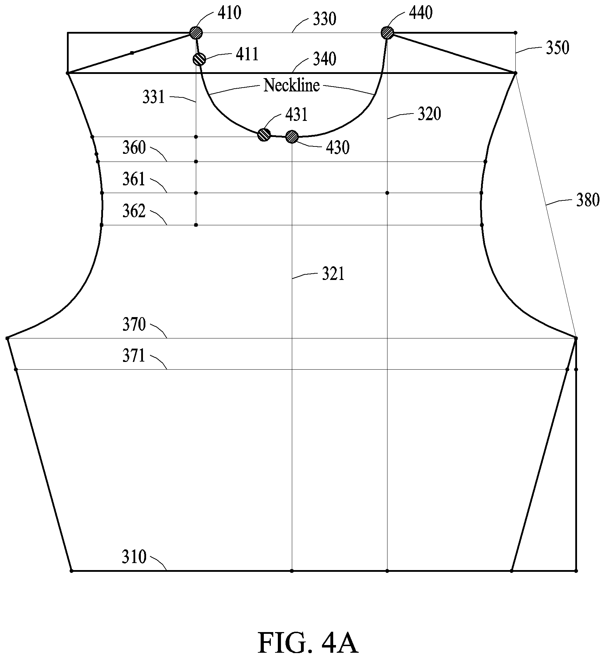

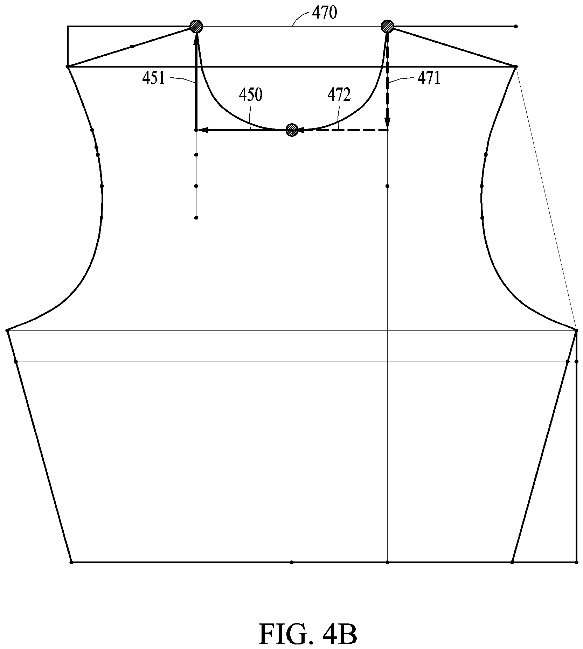

According to an embodiment, the simulation device 1100, in operation 240, starting from an end point of the second line, may generate a neckline based on at least one of the across shoulder length, the shoulder slope length, the neck depth, and the neck opening. A detailed process of generating the neckline is described below with reference to FIGS. 4A and 4B.

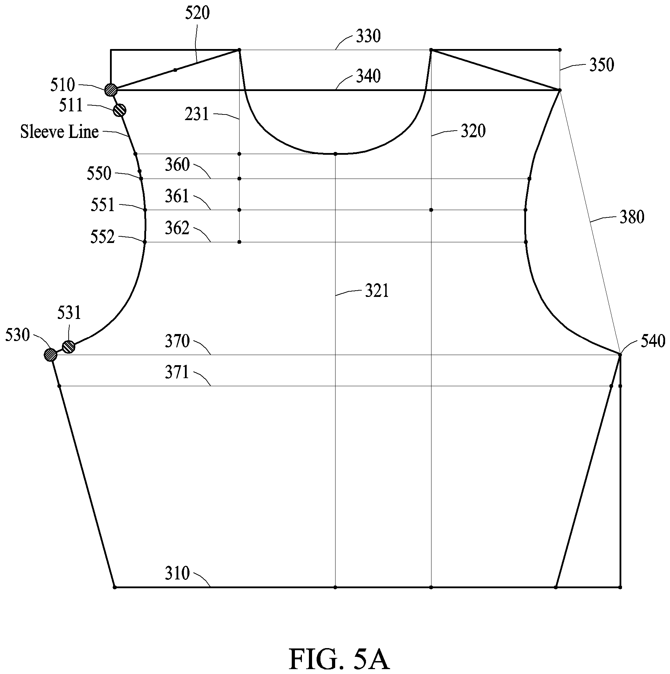

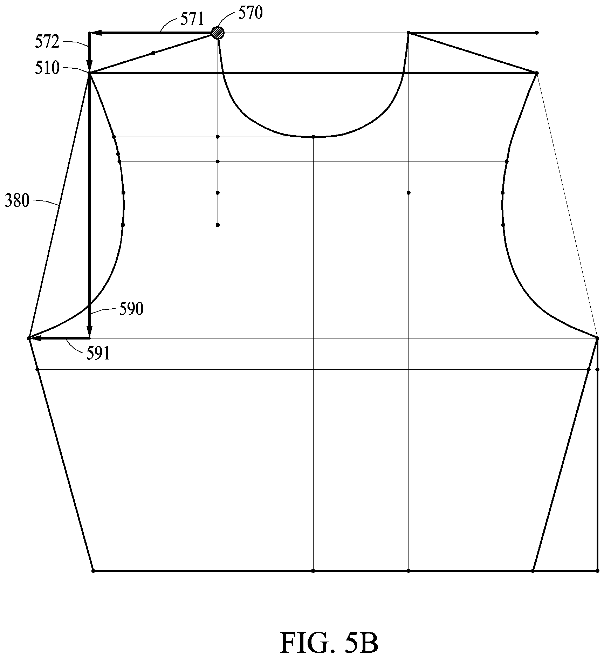

According to an embodiment, the simulation device 1100, in operation 250, may generate a sleeve line based on at least one of the armhole length, the across length, and the across chest length. A detailed process of generating the sleeve line is described in detail below with reference to FIGS. 5A and 5B.

FIG. 3 is a diagram illustrating a measurement parameter corresponding to the first pattern block according to an embodiment.

Since the measurement parameters corresponding to the first pattern block are described with reference to FIG. 2, a detailed description thereof is omitted in this drawing.

FIGS. 4A and 4B are diagrams illustrating a process of generating a neckline, according to an embodiment.

According to an embodiment, the simulation device 1100 may generate the neckline line starting from an end point of the second line. Using at least one of the across shoulder length, the shoulder slope length, the neck depth, and the neck opening, the simulation device 1100 may generate points at a predetermined distance away from the end point of the second line and generate the neckline by connecting the point to the point.

When the second line is the line 320, the simulation device 1100 may determine positions of points for generating the neckline starting from an end point 440 of the second line. When the second line is the line 320, the second line may be generated based on the HPS length. The simulation device 1100 may generate a center point 430 of the neckline at a position moved by a first distance 472 based on the neck opening in a first direction and moved by a second distance 471 based on the neck depth in a second direction. Hereinafter, the first direction may be understood as one of both directions of the x-axis and the second direction may be understood as one of both directions of the y-axis. The movement in the first direction and the movement in the second direction may be performed regardless of order. According to an embodiment, the simulation device 1100 may generate the neckline by connecting the center point 430 and the end point 440 of the second line. The neckline may be a straight line, a curve, or a combination thereof.

The first distance may be, for example, a value obtained by multiplying the neck opening by a coefficient. Here, the coefficient may be a value between "0" and " 1". The second distance may be, for example, a value obtained by multiplying the neck depth by a coefficient. Here, the coefficient may be a value between "0" and " 1" and may be in a range in which "0" is the lower limit and a value exceeding the lower limit (e.g., a value greater than or equal to " 1") is set as the upper limit.

When the second line is the line 321, the simulation device 1100, starting from the center point 430 of the neckline, may determine positions of points for generating the neckline. When the second line is the line 321, the second line may be generated based on the center height. According to an embodiment, the simulation device 1100 may generate an end point 410 of the neckline that is in contact with a shoulder line at a position moved by a first distance 450 based on the neck opening in the first direction and moved by a second distance 451 based on the neck depth in the second direction. The simulation device 1100 may generate the neckline by connecting the end point 410 of the second line and the center point 430 of the neckline. The neckline may be a straight line, a curve, or a combination thereof.

According to an embodiment, the simulation device 1100 may adjust the curvature of a line of a pattern using at least one adjusting point 411 or 431. The line of the pattern may include at least one of the neckline and the sleeve line. The simulation device 1100 may determine whether an angular constraint is satisfied using at least one adjusting point for adjusting the curvature of the line of the pattern. The angular constraint may include a constraint such that a straight line generated by at least one adjusting point entering one end point of the line of the pattern and an outline meeting an end point of the line of the pattern are orthogonal to each other. For example, the angular constraint may include a constraint such that a straight line entering the end point 410 of the neckline from the adjusting point 411 and an outline (e.g., a shoulder slope line) meeting the end point 410 of the neckline meet at a right angle. In another example, the angular constraint may include a constraint such that a straight line entering the center point 430 of the neckline from the adjusting point 431 and the second line having the center point 430 of the neckline as one end point meet at a right angle. Specifically, the simulation device 1100 may determine whether the angular constraint is satisfied such that a straight line (e.g., a tangent line generated by a corresponding adjusting point on the line of the pattern) generated by at least one adjusting point entering one end point of the line of the pattern and an outline meeting an end point of the line of the pattern are orthogonal to each other.

The simulation device 1100 may satisfy the angular constraint by adjusting positions of the adjusting points 411 and 431. In another example, the simulation device 1100 may adjust the positions of the adjusting points 411 and 431 by receiving an input from a user about the position movement of the adjusting points 411 and 431. Through this, the simulation device 1100 may output a result of naturally connecting the neckline of the front pattern and the neckline of the back pattern as a simulation result in a situation in which the T-shirt front pattern and the T-shirt back pattern are combined.

According to the embodiment, the simulation device 1100 may adjust the curvature and length of the curve including the adjusting point corresponding to a position adjustment of the adjusting point. The simulation device 1100 may adjust the length of the line of the pattern using at least one adjusting point to satisfy a length constraint. The line of the pattern may include at least one of the neckline and the sleeve line.

According to an embodiment, the length constraint may include a constraint such that a length of at least a part of another pattern combined with the pattern is the same as the length of the line of the pattern. For example, when the first pattern block (e.g., a T-shirt torso pattern) and a second pattern block (a sleeve pattern) are combined, the sleeve line of the first pattern block and the cap line of the second pattern block may be in a combined relationship. In this case, the length of the sleeve line and the length of the cap line need to be the same. Accordingly, the simulation device 1100 may adjust the length of the sleeve line and the length of the cap line to be the same by adjusting at least one of the lengths of the sleeve line and the cap line using the adjusting point.

FIGS. 5A and 5B are diagrams illustrating a process of generating a sleeve line, according to an embodiment.

According to an embodiment, the simulation device 1100 may generate the sleeve line starting from an end point 570 of the neckline. The simulation device 1100 may generate a third line 520 corresponding to the shoulder slope line starting from the end point 570 of the neckline. According to an embodiment, the simulation device 1100, starting from an end point 510 of the third line, may generate the sleeve line based on at least one of the line 380 corresponding to the armhole length, the lines 360, 361, and 362 corresponding to the across length, and the lines 370 and 371 corresponding to the across chest length.

According to an embodiment, the simulation device 1100, starting from the end point 570 of the neckline, may generate the end point 510 (e.g., the armhole) of the third line at a position moved by a distance 571 determined based on the line 330 corresponding to the neck opening and the line 340 corresponding to the across shoulder length in the first direction and moved by a distance 572 determined based on the neck depth and the line 350 corresponding to the shoulder slope height in the second direction. For example, the distance 571 may be a value obtained by dividing a value obtained by subtracting the length of the line 330 corresponding to the neck opening from the length of the line 340 corresponding to the across shoulder length by "2". For example, the distance 572 may be a value obtained by subtracting the length of the line 350 corresponding to the shoulder slope height from the neck depth 231. The simulation device 1100 may generate a point at a position moved from the end point 510 of the third line by a value obtained by multiplying the calculated value by a predetermined coefficient.

The lengths of the lines 360, 361, and 362 corresponding to the across length may vary based on a distance away from the HPS (e.g., the end point 570 of the neckline). The across length is a length of a line (e.g., a length of a line segment) orthogonal to the line 320 (or the line 321) with one point on the left sleeve line and one point on the right sleeve line as both end points and the sleeve line is a curve. Accordingly, the across length of the present disclosure may vary based on the distance away from the HPS. For example, the length of the line 360 corresponding to the across length may be a length of a line orthogonal to the line 320 (or the line 321) at a distance of "4" inches away from the HPS. In another example, the length of the line 361 may be a length of a line orthogonal to the line 320 (or the line 321) at a distance of "5" inches away from the HPS. In another example, the length of the line 362 may be a length of a line orthogonal to the line 320 (or the line 321) at a distance of "6" inches away from the HPS. The simulation device 1100 may generate the sleeve line using at least one of the lines 360, 361, and 362 corresponding to the across length.

According to an embodiment, the simulation device 1100, starting from the end point 510 of the third line, may generate an end point of the sleeve line at a distance moved by a distance 590 determined based on the line 340 corresponding to the across shoulder length and the lines 370 and 371 corresponding to the across chest length in the first direction, and then moved by a distance 591 determined based on the line 340 corresponding to the across shoulder length, the lines 370 and 371 corresponding to the across chest length, and the line 380 corresponding to the armhole length in the second direction. For example, the distance 591 may be a value obtained by subtracting the length of the line 340 corresponding to the across shoulder length from the length of the line 370 corresponding to the across chest length and dividing by "2". For example, the distance 590 may be a square root of a value obtained by subtracting a square of the distance 591 from a square of the length of the line 380 corresponding to the armhole length. The simulation device 1100 may generate the end point 530 of the sleeve line at a position away from the end point 510 of the third line by a value obtained by multiplying the calculated value by a coefficient. According to an embodiment, the simulation device 1100 may generate the sleeve line by connecting the end point 530 of the sleeve line to the end point 510 of the third line.

When a received measurement parameter includes the length of the line 371 corresponding to the across chest length, the simulation device 1100 may calculate the length of the line 370 corresponding to the across chest length, which is a distance between an armhole 530 and an armhole 540, based on the length of the line 371 corresponding to the across chest length. The armhole 530 and the armhole 540 in FIG. 5A may refer to one end point of the armhole for convenience, and a length of the shortest line segment between each end point may refer to as a distance between the armhole 530 and the armhole 540. The line 371 corresponding to the across chest length may be a line at a predetermined distance away from the armhole 530. For example, the line 371 corresponding to the across chest length may be a line orthogonal to the line 320 (or the line 321) at"1" inch below the armhole 530. The simulation device 1100 may determine a position of the end point 530 of the sleeve line using the length of the line 370 corresponding to the calculated across chest length.

According to an embodiment, the simulation device 1100 may adjust the curvature of the line of the pattern using at least one adjusting point 511 or 531 for satisfying the angular constraint. The line of the pattern may include at least one of the neckline and the sleeve line. For example, the angular constraint may include a constraint such that a straight line entering the end point 510 of the third line from the adjusting point 511 and the third line 520 meet at a right angle. In another example, the angular constraint may include a constraint such that a straight line entering the end point 530 of the sleeve line from the adjusting point 531 and a line 560 meet at a right angle.

The simulation device 1100 may satisfy the angular constraint by adjusting positions of the adjusting points 511 and 531. In another example, the simulation device 1100 may adjust the positions of the adjusting points 511 and 531 by receiving an input about the position movement of the adjusting points 511 and 531 from a user. Through this, the simulation device 1100 may output a result of naturally connecting the sleeve line of the front pattern and the sleeve line of the back pattern as a simulation result in a situation in which the T-shirt front pattern and the T-shirt back pattern are combined.

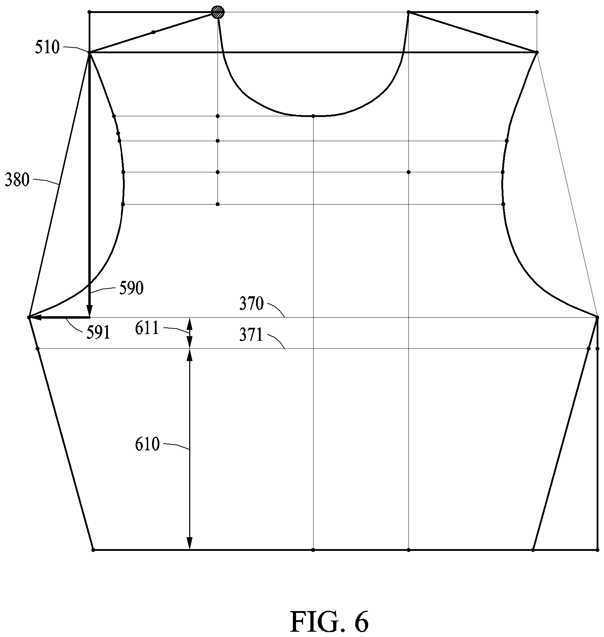

FIG. 6 is a diagram illustrating a method of calculating a distance between an armhole and an armhole, according to an embodiment.

Although it is accurate to specify the across chest length as the length of the line 370, there may be a case in which the across chest length is received as the length of the line 371 at a predetermined distance (e.g., "1" inch) away from the armhole. When the simulation device 1100 receives the length of the line 371 as a measurement parameter, the simulation device 1100 may estimate the length of the line 370, which is the distance between the armhole and the armhole, based on the length of the line 371. The estimated length of the line 370 may be the across chest length.

Hereinafter, a method of estimating the length of the line 370 corresponding to the across chest length is described in detail. The simulation device 1100 may estimate a distance of the line 370 based on the length of the line 371 and the pattern height. The simulation device 1100 may verify the estimated distance of the line 370 based on the armhole length. The simulation device 1100 may re-estimate the length of the line 370 according to a result of verifying or may determine the estimated distance of the line 370 as the across chest length.

More specifically, when the length of the line 371 is received, the simulation device 1100 may not calculate the distance 590 and the distance 591. Accordingly, since there is no information about the distance 590 and the distance 591, the simulation device 1100 may not determine a position of the point 530 necessary for generating the sleeve line.

Accordingly, the simulation device 1100 may estimate a distance 610 from the pattern hem to the line 371 in a certain range. For example, the distance 610 may be a median value. When the distance 610 from the pattern hem to the line 371 is the median value, the simulation device 1100 may calculate a distance from the pattern hem to the line 370. This may be because the line 370 and the line 371 are separated by a certain distance. For example, the line 370 and the line 371 may be separated by " 1" inch. The simulation device 1100 may estimate the length of the line 370 based on the distance 610 and the length of the line 371. The simulation device 1100 may calculate the distance 590 and the distance 591 based on the estimated length of the line 370. The simulation device 1100 may calculate the length of the line 380 corresponding to the armhole length based on the distance 590 and the distance 591. The simulation device 1100 may determine whether to recalculate the length of the line 370 based on a difference between the armhole length included in the received measurement parameter and the calculated armhole length (the length of the line 380). For example, when the difference between the armhole length included in the measurement parameter and the calculated armhole length (the length of the line 380) is in an allowance range, the simulation device 1100 may determine the estimated length of the line 370 as the distance between the armhole and the armhole. When the difference is greater than a certain reference, the simulation device 1100 may determine the distance 610 from the pattern hem to the line 371 to be in an adjusted range (e.g., when a certain range is [I, pattern height], the adjusted range is [median value + C, pattern height]), and then may re-estimate the length of the line 370. When the difference is less than a certain reference, the simulation device 1100 may determine the distance 610 from the pattern hem to the line 371 to be in an adjusted range (e.g., when a certain range is [I, pattern height]), the adjusted range is [1, median value - C]), and then may re-estimate the length of the line 370. C may be any number. Such a method may be using a binary search.

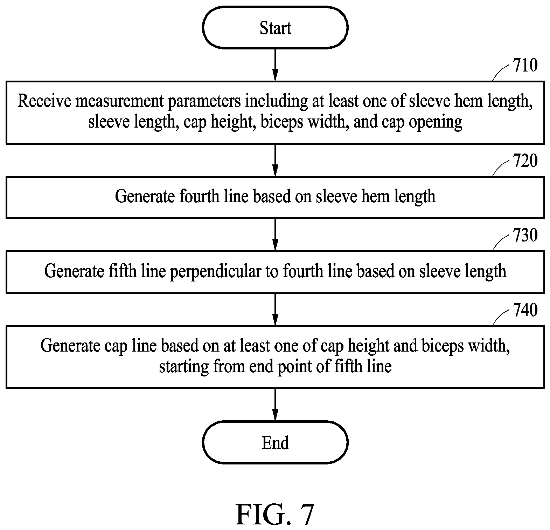

FIG. 7 is a flowchart illustrating a method of generating a pattern corresponding to a second pattern block, according to an embodiment.

According to an embodiment, the simulation device 1100 may receive different measurement parameters depending on a pattern block. For example, the second pattern block may be the sleeve pattern and there may be measurement parameters corresponding to the sleeve pattern.

According to an embodiment, the simulation device 1100, in operation 710, may receive measurement parameters including at least one of a sleeve hem length, a sleeve length, a cap height, a biceps width, and a cap opening.

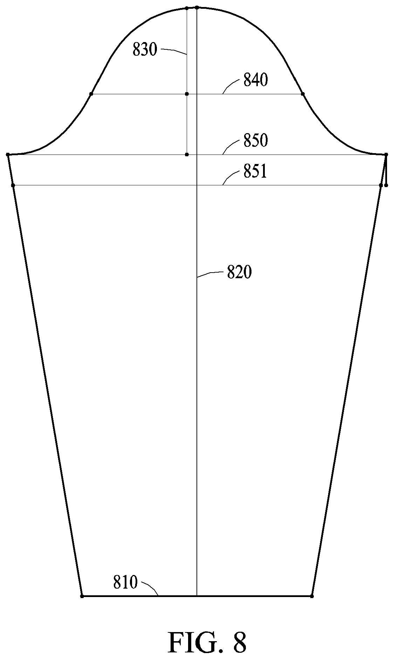

The sleeve hem length may refer to a hem length of the sleeve and may correspond to a length of a line 810 of FIG. 8.

The sleeve length may refer to a length from the sleeve hem to a center point of the cap and may correspond to a length of a line 820 of FIG. 8.

The cap height may refer to a length from a line 850 indicating the biceps width to the center point of the cap and may correspond to a line 830 of FIG. 8.

The biceps width may refer to the circumferential length of the sleeve enclosing the arm of a person and may correspond to lines 850 and 851 of FIG. 8.

The cap opening may refer to a length of a straight line that connects one point of the cap line to one point opposite to the cap line and may correspond to a line 840 of FIG. 8.

According to an embodiment, the simulation device 1100, in operation 720, may generate a fourth line based on the sleeve hem length.

According to an embodiment, the simulation device 1100, in operation 730, may generate a fifth line perpendicular to the fourth line based on the sleeve length.

According to an embodiment, the simulation device 1100, in operation 740, may generate a cap line based on at least one of the cap height and the biceps width, starting from an end point of the fifth line.

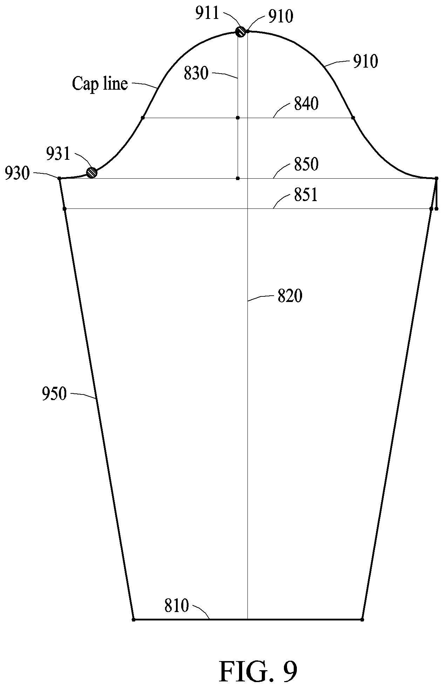

A method of generating the cap line is described in detail below with reference to FIG. 9.

FIG. 8 is a diagram illustrating a measurement parameter corresponding to the second pattern block according to an embodiment.

Since the measurement parameter corresponding to the second pattern block is described with reference to FIG. 7, a detailed description thereof is omitted in this drawing.

FIG. 9 is a diagram illustrating a process of generating a cap line, according to an embodiment.

According to an embodiment, the simulation device 1100 may generate the fourth line 810 based on the sleeve hem length.

According to an embodiment, the simulation device 1100 may generate the fifth line 820 perpendicular to the fourth line 810 based on the sleeve length. The fifth line 820 may refer to a line that perpendicularly intersects with the fourth line 810 at a central point of the fourth line 810.

According to an embodiment, the simulation device 1100, starting from an end point 910 of the fifth line, may determine a position moved by a distance determined based on the biceps width in the first direction and moved by a distance determined based on the cap height in the second direction as an end point 930 of the cap line. For example, the simulation device 1100 may determine a position moved by a distance corresponding to half of the biceps width in the first direction and moved by the cap height in the second direction as the end point 930 of the cap line. In addition, the simulation device 1100 may generate the line 840 having the received cap opening. The simulation device 1100 may generate the cap line by connecting the end point of the line 840, the end point 930 of the cap line, and the end point 910 of the fifth line.

The simulation device 1100 may receive the length of the line 851 instead of the length of the line 850 while receiving the measurement parameter. In this case, the simulation device 1100 may estimate the length of the line 850 based on the length of the line 851. A method of estimating the length of the line 850 may be the same as or similar to that described with reference to FIG. 6. This may be a process in which the simulation device 1100 estimates a distance between the line 810 and the line 851 in a certain range through the fact that the line 850 and the line 851 are separated by a certain distance (e.g., "1" inch) and finally calculates the length of the line 810.

According to an embodiment, the simulation device 1100 may satisfy the angular constraint and the length constraint in the same or similar manner as that of the first pattern block using adjusting points 911 and 931.

The simulation device 1100 may adjust a position of the adjusting point 910 such that a straight line entering the adjusting point 910 from the adjusting point 911 and the line 830 are perpendicular to each other for satisfying the angular constraint. In another example, the simulation device 1100 may adjust a position of the adjusting point 951 such that a straight line entering the adjusting point 930 from the adjusting point 931 and a line 950 are perpendicular to each other for satisfying the angular constraint.

Since the simulation device 1100 may also adjust the length of the cap line by adjusting the adjusting point, the length constraint may be satisfied. The simulation device 1100 may adjust the positions of the adjusting points 911 and 931 to match the length of the sleeve line of the first pattern block to the length of the cap line of the second pattern block.

FIG. 10 is a diagram illustrating a user interface that may input a measurement parameter corresponding to the first pattern block according to an embodiment.

FIG. 10 illustrates a pattern block large classification 1010, a T-shirts pattern block 1011, a pattern block sub-classification 1030, a pattern block shape 1050, measurement parameters 1070, a shoulder seam length 1071, a neck drop 1072, a neck opening 1073, a center front 1074, a side seam 1075, an across front 1076, and an armhole drop 1077. The described configuration is only an example, and some components may be omitted or other components may be added to the user interface.

The pattern block large classification 1010 shows T-shirts, shirts, pants, skirts, dresses, jackets, and coats. The description of FIG. 10 is only an example, and some components may be added or omitted thereto or therefrom. The simulation device 1100 may receive a selection input for T-shirts 1011 in the pattern block large classification 1010. In this case, the simulation device 1100 may output, on a screen, the pattern block sub-classification 1030 object related to the T-shirts 1011. The pattern block related to the T-shirts 1011 may include a Basic, Basic+, Raglan, Ribbing, and the like. When the simulation device 1100 receives a selection input for the Basic, the simulation device 1100 may output a pattern block corresponding to a T-shirt Basic to the pattern block shape 1050 area.

According to an embodiment, the simulation device 1100 may receive a user input for a plurality of measurement parameters through the measurement parameters 1070 area. When a measurement parameter in the measurement parameters 1070 area is selected, an area corresponding to the selected measurement parameter may be displayed in the pattern block shape 1050 to be identified from other areas. For example, the color or transparency may be different from other parts of the pattern block.

According to an embodiment, when a user inputs a measurement parameter through the user interface shown in FIG. 10, the simulation device 1100 may receive the measurement parameter and generate a pattern.

The simulation device 1100 may receive measurement parameters and generate a point list and a point type list based on the measurement parameters and pattern information. The point may refer to a point necessary for generating a pattern. Accordingly, the point list may refer to a set of points necessary for generating a pattern. The point type may refer to a type of points necessary for generating a pattern. That is, the point type may correspond to a type indicating which points are necessary for generating a corresponding pattern. Accordingly, the point type list may refer to a set of types of points necessary for generating a pattern. The simulation device 1100 may automatically generate a pattern corresponding to the automatically input measurement based on the measurement parameters and pattern information. In an embodiment of the present disclosure, an example of patterns constituting a top pattern is described, but the simulation device 1100 of the present disclosure is not limited thereto, and all patterns for manufacturing garments such as pants patterns, skirt patterns, outerwear patterns, and the like may be automatically generated. The pattern information may include information determined based on at least one of a type of a pattern, a half completion, and a symmetrical type. The type of the pattern may refer to a type of a pattern to be generated. For example, when the pattern is a top pattern, the type of the pattern may include a top front pattern, a top back pattern, a sleeve pattern, a neckline pattern, and the like. The half completion may be whether the received measurement parameters are measurement parameters for an area corresponding to half of the pattern. For example, when the half completion is confirmed based on the measurement parameters of the pattern, the simulation device 1100 may generate half of the pattern. In this case, the simulation device 1100 may duplicate a symmetrical pattern using half of the pattern or generate a pattern with half of the pattern extending to the symmetrical pattern. This may be determined by selecting whether (e.g., whether to select the half completion) to display a pattern to be generated in the user interface provided by the simulation device 1100 by only half. The symmetrical type may refer to a symmetrical type of a pattern, and the simulation device 1100 may generate a pattern in a state in which the pattern, which is the symmetrical type, is unfolded based on a symmetrical line.

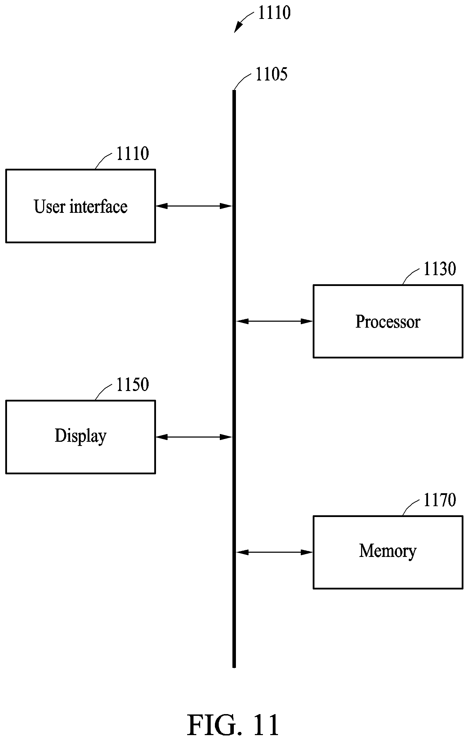

FIG. 11 is a block diagram illustrating a simulation device according to various embodiments.

According to an embodiment, the simulation device 1100 may be a server. According to another embodiment, the simulation device 1100 may be a user terminal (e.g., a mobile device, a desktop, a laptop, a personal computer, etc.). Referring to FIG. 11, according to an embodiment, the simulation device 1100 may include a user interface 1110, a processor 1130, a display 1150, and a memory 1170. The user interface 1110, the processor 1130, the display 1150, and the memory 1170 may be connected to one another through a communication bus 1105.

The user interface 1110 may receive a user input for each of measurement parameters.

The display 1150 may display a simulation result generated by the processor 1130. The simulation device 1100 may output the user interface shown in FIG. 10.

The memory 1170 may store the generated simulation result. In addition, the memory 1170 may store a variety of information generated in the processing process of the processor 1130 described above. In addition, the memory 1170 may store a variety of data and programs. The memory 1170 may include a volatile memory or a nonvolatile memory. The memory 1170 may include a high-capacity storage medium such as a hard disk to store a variety of data.

In addition, the processor 1130 may perform at least one method described with reference to FIGS. 1 to 10, or an algorithm corresponding to at least one method. The processor 1130 may be a hardware-implemented data processing device having a circuit that is physically structured to execute desired operations. The desired operations may include, for example, code or instructions in a program. The processor 1130 may include, for example, a central processing unit (CPU), a graphics processing unit (GPU), or a neural network processing unit (NPU). For example, the simulation device 1100 that is implemented as hardware may include a microprocessor, a CPU, a processor core, a multi-core processor, a multiprocessor, an application-specific integrated circuit (ASIC), and a field-programmable gate array (FPGA).

The processor 1130 may execute a program and control the simulation device 1100. Code of the program executed by the processor 1130 may be stored in the memory 1170.

The methods according to the examples may be recorded in non-transitory computer-readable media including program instructions to implement various operations of the examples. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs or DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. A method of generating a pattern based on a measurement parameter of a garment, the method comprising:
receiving measurement parameters comprising at least one of a pattern hem length, a pattern height, an across shoulder length, a shoulder slope length, a neck depth, a neck opening, an across length, an across chest length, and an armhole length;
generating a first line corresponding to a pattern hem based on the pattern hem length;
generating a second line perpendicular to the first line based on the pattern height;
starting from an end point of the second line, generating a neckline based on at least one of the across shoulder length, the shoulder slope length, the neck depth, and the neck opening; and
generating a sleeve line based on at least one of the armhole length, the across length, and the across chest length.

2. The method of claim 1, wherein the pattern height comprises at least one of a high point shoulder (HPS) length and a center height.

3. The method of claim 1, wherein the generating of the neckline comprises,
when the second line is generated based on an HPS length, generating a center point of a neckline at a position moved by a first distance based on a neck opening in a first direction and moved by a second distance based on a neck depth in a second direction; and
generating the neckline based on the center point.

4. The method of claim 1, wherein the generating of the neckline comprises,
when the second line is generated based on a center height, generating an end point of a neckline that is in contact with a shoulder line at a position moved by a first distance based on a neck opening in a first direction and moved by a second distance based on a neck depth in a second direction; and
generating the neckline based on the end point.

5. The method of claim 1, wherein the across length varies based on a distance away from an HPS.

6. The method of claim 1, wherein the generating of the sleeve line comprises:
starting from an end point of the neckline, generating a third line corresponding to a shoulder slope line; and
starting from an end point of the third line, generating a sleeve line based on at least one of the armhole length, the across length, and the across chest length.

7. The method of claim 6, wherein the generating of the sleeve line comprises:
starting from the end point of the third line, generating an end point of the sleeve line at a distance moved by a distance determined based on the across shoulder length and the across chest length in a first direction, and then moved by a distance determined based on the across shoulder length, the across chest length, and the armhole length in a second direction; and
generating the sleeve line based on the end point.

8. The method of claim 1, further comprising, when the across chest length is received as a length of a line at a predetermined distance away from the armhole,
estimating a distance from the armhole to an opposite armhole based on the received length of the line and the pattern height;
verifying the estimated distance based on the armhole length; and
re-estimating the distance from the armhole to the opposite armhole according to a result of the verifying or determining the estimated distance as the across chest length.

9. The method of claim 1, further comprising:
adjusting a curvature of a line of a pattern using at least one adjusting point, wherein the line of the pattern comprises at least one of the neckline and the sleeve line.

10. The method of claim 9, wherein the adjusting of the curvature comprises determining whether an angular constraint is satisfied using the at least one adjusting point,
wherein the angular constraint comprises a constraint such that a straight line generated by the at least one adjusting point entering one end point of the line of the pattern and an outline meeting an end point of the line of the pattern are orthogonal to each other.

11. The method of claim 1, further comprising:
adjusting a length of a line of a pattern using at least one adjusting point, wherein the line of the pattern comprises at least one of the neckline and the sleeve line.

12. The method of claim 11, wherein the adjusting of the length comprises determining whether a length constraint is satisfied using the at least one adjusting point,
wherein the length constraint comprises a constraint such that a length of at least a part of another pattern combined with the pattern and the length of the line of the pattern are the same.

13. A method of generating a pattern based on a measurement parameter of a garment, the method comprising:
receiving measurement parameters comprising at least one of a sleeve hem length, a sleeve length, a cap height, a biceps width, and a cap opening;
generating a fourth line based on the sleeve hem length;
generating a fifth line perpendicular to the fourth line based on the sleeve length; and
starting from an end point of the fifth line, generating a cap line based on at least one of the cap height and the biceps width.

14. The method of claim 13, wherein the generating of the cap line comprises,
starting from the end point of the fifth line, determining a position moved by a distance determined based on the biceps width in a first direction and moved by a distance determined based on the cap height in a second direction as an end point of the cap line; and
generating the cap line based on the end point.

15. The method of claim 13, further comprising:
determining whether a length constraint for a length of a sleeve line and a length of the cap line is satisfied.

16. A computer program stored in a non-transitory computer readable medium, the computer program being configured to perform the method of one of claims 1 to 15 in combination with hardware.

17. A simulation device for generating a pattern, the simulation device comprising:
a user interface;
a memory; and
a processor,
wherein the processor is configured to:
receive measurement parameters comprising at least one of a pattern hem length, a pattern height, an across shoulder length, a shoulder slope length, a neck depth, a neck opening, an across length, an across chest length, and an armhole length;
generate a first line corresponding to a pattern hem based on the pattern hem length;
generate a second line perpendicular to the first line based on the pattern height;
starting from an end point of the second line, generate a neckline based on at least one of the across shoulder length, the shoulder slope length, the neck depth, and the neck opening; and
generate a sleeve line based on at least one of the armhole length, the across length, and the across chest length.

18. A simulation device for generating a pattern, the simulation device comprising:
a user interface;
a memory; and
a processor,
wherein the processor is configured to:
receive measurement parameters comprising at least one of a sleeve hem length, a sleeve length, a cap height, a biceps width, and a cap opening;
generate a fourth line based on the sleeve hem length;
generate a fifth line perpendicular to the fourth line based on the sleeve length; and
starting from an end point of the fifth line, generate a cap line based on at least one of the cap height and the biceps width.
